# EUROPÄISCHE PATENTANMELDUNG

(11) **EP 1 357 716 A1**
(43) Veröffentlichungstag der Anmeldung: **29.10.2003**
(21) Anmeldenummer: 02009071.8
(22) Anmeldetag: 23.04.2002
(51) Int. Cl.: H04L 25/03, H04L 25/02

(54) **Verfahren zur Unterdrückung von Gleichkanalstörungen in einem TDMA-System**

(71) Anmelder: SIEMENS AKTIENGESELLSCHAFT, 80333 München (DE)
(72) Erfinder: Schreib, Franz, 81475 München (DE)

(57) **Zusammenfassung**

Verfahren zur Unterdrückung von Gleichkanalstörungen zwischen Teilnehmersignalen benachbarter Funkzellen eines Funkkommunikationssystems.

Die Erfindung betrifft ein Verfahren zur Unterdrückung von Gleichkanalstörungen zwischen Teilnehmersignalen benachbarter Funkzellen eines Funkkommunikationssystems, bei dem die Teilnehmersignale mehrerer Teilnehmer in den benachbarten Funkzellen mit Hilfe eines Zeitschlitz-Vielfachzugriffsverfahrens übertragen und bei dem in den benachbarten Funkzellen gleiche Trägerfrequenzen zur Übertragung verwendet werden. Dabei wird sendeseitig jedem einzelnen Teilnehmer jeweils eine Trainingssequenz zugeordnet, die mit den entsprechenden Teilnehmernutzdaten zum Teilnehmersignal zusammengefasst werden. Die Trainingssequenzen sind untereinander zeitlich synchronisiert. Empfangsseitig werden bei einem ersten Teilnehmer einer ersten Funkzelle durch Teilnehmersignale eines zweiten Teilnehmers einer benachbarten zweiten Funkzelle verursachte Gleichkanalstörungen mit Hilfe der Trainingssequenzen unterdrückt.

## Beschreibung

Bei Funkkommunikationssystemen, wie beispielsweise beim GSM-Mobilfunksystem, ist ein zu versorgender Bereich in Funkzellen aufgeteilt. Im allgemeinen ist in jeder Funkzelle jeweils eine Basisstation zur Übertragung von Teilnehmersignalen zu den der Funkzelle zugeordneten Teilnehmern angeordnet, wobei jede Funkzelle wiederum in mehrere - im allgemeinen drei - Sektoren aufgeteilt sein kann.
Zur Übertragung von Teilnehmersignalen zwischen Teilnehmer und Basisstation ist jeder einzelnen Basisstation jeweils eine Auswahl von Trägerfrequenzen fest zugeordnet.

Bei einer Verwendung eines Zeitschlitz-Vielfachzugriffsverfahrens, wie beispielsweise beim GSM-Mobilfunksystem, sind zwei Methoden einer Trägerfrequenz-Zuordnung bekannt.

Bei einer ersten Methode werden anhand einer vorgegebenen Frequenzwiederholungsrate gleiche Trägerfrequenzen derart auf benachbarte Funkzellen verteilt, dass bei den Trägerfrequenzen einer betrachteten Funkzelle möglichst geringe Gleichkanalstörungen von den Trägerfrequenzen einer benachbarten Funkzelle erwartet werden können. Daraus ergibt sich eine Frequenzwiederholungsrate bei benachbarten Funkzellen. Eine Frequenzwiederholungsrate von 12 bedeutet beispielsweise, dass eine Anzahl von zur Verfügung stehenden Trägerfrequenzen auf 12 benachbarte Funkzellen aufgeteilt wird. Die Frequenzwiederholungsrate wird beispielsweise bei einem GSM-Mobilfunksystem durch die Planung des BCCH-Kanals bestimmt. Bei der ersten Methode werden somit eine Vielzahl von wertvollen Trägerfrequenzen benötigt, bei vernachlässigbaren Gleichkanalstörungen.

Bei einer zweiten Methode werden benachbarten Funkzellen jeweils gleiche Trägerfrequenzen zugeordnet, wodurch Gleichkanalstörungen in Kauf genommen werden müssen. In der Praxis hat sich jedoch gezeigt, dass, bedingt durch statistische Effekte, diese tolerierbar sind.

Werden nämlich Teilnehmersignale mit Hilfe eines Zeitschlitz-Vielfachzugriffsverfahrens übertragen, so werden typischerweise nur 25% der in jeder einzelnen Funkzelle verfügbaren Zeitschlitze zur gleichen Zeit für eine Übertragung belegt. Es ergibt sich eine als Teilnehmerdichte der Funkzelle bezeichnete "Fractional Load" von 25%. Da bei benachbarten Funkzellen die Belegung der Zeitschlitze zufallsbedingt erfolgt, sind die bei einem Teilnehmer einer ersten Funkzelle entstehenden Gleichkanalstörungen durch einen Teilnehmer einer zweiten Funkzelle vernachlässigbar klein.
Diese Gleichkanalstörungen stellen jedoch eine Kapazitätsbegrenzung der Teilnehmerdichte beim Funkkommunikationssystem dar, da bei steigender Teilnehmeranzahl auch die Gleichkanalstörungen zunehmen.

Bei GSM-Mobilfunksystemen werden die bei einem Teilnehmer bzw. einer Basisstation empfangenen Teilnehmersignale aufwändig entzerrt und nur ein einzelnes gewünschtes Teilnehmersignal daraus separiert und weiterverarbeitet. Die einzelnen Teilnehmersignale sind dabei durch den einzelnen Teilnehmern zugeordneten Trainingssequenzen unterscheidbar. Spezifiziert ist dies in "Technical Specification 3GPP TS 05.02 V8.8 (2001-01)", Release 1999, Kapitel 5.3 .

Aus EP 0 988 714 B1 ist ein Verfahren zur Kanalschätzung bekannt, das auch als "Joga"-Kanalschätzung bezeichnet wird. Dabei steht die Abkürzung "JOGA" für "Joint Detection Basing On GSM Air Interface".

Die Aufgabe der vorliegenden Erfindung besteht darin, unter Verwendung einer minimalen Anzahl an Trägerfrequenzen eine Erhöhung der Teilnehmerdichte bei einem Funkkommunikationssystem zu erreichen.

Die Aufgabe der Erfindung wird durch die Merkmale des Anspruchs 1 gelöst. Vorteilhafte Weiterbildungen sind in den Unteransprüchen angegeben.

Durch das erfindungsgemäße Verfahren werden Gleichkanalstörungen unterdrückt und damit eine Erhöhung der Teilnehmerdichte im Funkkommunikationssystem erreicht.

Das erfindungsgemäße Verfahren ist besonders vorteilhaft bei Basisstationen eines bereits realisierten GSM-Mobilfunksystems nachträglich einsetzbar, da geltende Standards bei der Realisierung des Verfahrens nicht betroffen sind.

Beim erfindungsgemäßen Verfahren werden jedem einzelnen Teilnehmer von benachbarten Funkzellen entweder funkzellenspezifische oder teilnehmerspezifische Trainingssequenzen zugewiesen. Unter Verwendung der JOGA-Kanalschätzung werden bei einer empfangsseitigen Entzerrung neben den Teilnehmernutzsignalen eines ersten Teilnehmers einer ersten Funkzelle nur diejenigen Teilnehmersignale von Teilnehmern von benachbarten Funkzellen berücksichtigt, die beim ersten Teilnehmer maximale Gleichkanalstörungen verursachen. Der bisher nötige Aufwand beim Empfänger zur Entzerrung wird dementsprechend reduziert.

Beim erfindungsgemäßen Verfahren kann beim Empfänger auf einen herkömmlichen Detektor, wie beispielsweise auf einen "16 state Viterbi"-Detektor, zurückgegriffen werden.

Durch das erfindungsgemäße Verfahren ist eine Verbesserung der Gleichkanalstörfestigkeit von mehr als 2 dB mit einfachen Mitteln erreichbar, was einer Zunahme der "Fractional Load" um einen Faktor 1,5 entspricht.

Bei der erfindungsgemäß verwendeten JOGA-Kanalschätzung wird eine durchzuführende "pseudoinverse Multiplikation" - vergleichend zum Stand der Technik - lediglich einmal durchgeführt.

Voraussetzung für das erfindungsgemäße Verfahren ist, dass die den einzelnen Teilnehmern zugeordneten Trainingssequenzen zeitsynchron zueinander sind.
Bei Basisstationen kann dies besonders vorteilhaft dadurch gelöst werden, dass zur Synchronisation eine im allgemeinen bei jeder Basisstation angeordnete "Location Measurement Unit, LMU" verwendet wird, die unter anderem GPS-Signale für eine zeitliche Referenz empfängt. Die GPS-Signale stehen für die Synchronisation an der Basisstation a priori zur Verfügung.

Im Folgenden wird ein Ausführungsbeispiel der Erfindung anhand einer Zeichnung näher erläutert. Dabei zeigen:
- FIG 1: benachbarte Funkzellen eines Funkkommunikationssystems mit funkzellenspezifisch zuordenbaren Teilnehmersequenzen,
- FIG 2: ein prinzipielles Blockschaltbild zur Durchführung des erfindungsgemäßen Verfahrens,
- FIG 3: ein Ausführungsbeispiel eines in FIG 2 dargestellten Joga-Kanalschätzers,
- FIG 4: ein Ausführungsbeispiel einer in FIG 2 dargestellten Einrichtung zur Interferenz-Entfernung, und
- FIG 5: ein Ablaufdiagramm zur Auswahl derjenigen Teilnehmersignale, die bei einem ersten Teilnehmer maximale Gleichkanalstörungen verursachen.

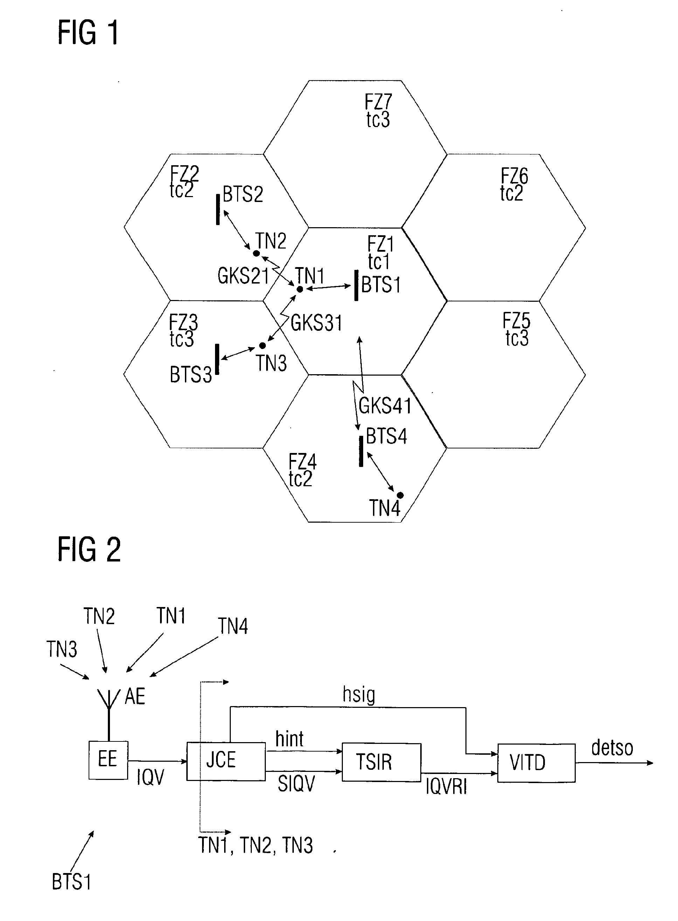

FIG 1 zeigt benachbarte Funkzellen FZ1 bis FZ7 eines Funkkommunikationssystems mit funkzellenspezifisch zuordenbaren Teilnehmersequenzen tc1, tc2 bzw. tc3.

Dabei wird einem Teilnehmer TN1, der einer ersten Funkzelle FZ1 zugeordnet ist, für eine Teilnehmersignal-Übertragung zwischen dem Teilnehmer TN1 und einer Basisstation BTS1 eine erste Trainingssequenz tc1 zugeordnet.
Weiteren hier nicht dargestellten Teilnehmern der ersten Funkzelle FZ1 wird ebenso die Trainingssequenz tc1 zugeordnet, die somit als funkzellenspezifische Trainingssequenz verwendet wird.

Ebenso werden den einer zweiten, vierten und sechsten Funkzelle FZ2, FZ4 und FZ6 zugeordneten Teilnehmern eine Trainingssequenz tc2 für eine Übertragung zugeordnet - hier im einzelnen den Teilnehmern TN2 und TN4. Den einer dritten, fünften und siebten Funkzelle FZ3, FZ5 und FZ7 zugeordneten Teilnehmern wird eine Trainingssequenz tc3 zugeordnet - hier im einzelnen dem Teilnehmer TN3.

Da die Funkzellen FZ2 bis FZ7 zur Funkzelle FZ1 benachbart sind, jedoch untereinander Abstände aufweisen, ist eine mehrfache Verwendung gleicher Trainingssequenzen tc2 und tc3 bei den verschiedenen Funkzellen möglich.
Zur Übertragung der Teilnehmersignale zwischen den einzelnen Teilnehmern TN1 bis TN4 und diesen entsprechend zugeordneten Basisstationen BTS1 bis BTS4 wird ein Zeitschlitz-Vielfachzugriffsverfahren gemäß dem GSM-Standard verwendet, wobei die von den Basisstationen BTS1 bis BTS4 verwendeten Trägerfrequenzen gleich sind.

Belegen die Teilnehmer TN1 bis TN4 zeitgleiche Zeitschlitze, so verursacht der zweite Teilnehmer TN2 beim ersten Teilnehmer TN1 eine maximale Gleichkanalstörung GKS2, bzw. der dritte Teilnehmer TN3 beim ersten Teilnehmer TN1 eine maximale Gleichkanalstörung GKS3. Der Teilnehmer TN4 soll vergleichend dazu lediglich eine minimale Gleichkanalstörung GKS41 beim ersten Teilnehmer TN1 verursachen.

Anstelle einer oben geschilderten funkzellenspezifischen Trainingssequenz-Zuordnung ist auch eine teilnehmerspezifische Trainingssequenz-Zuordnung möglich, bei der dann jedem einzelnen Teilnehmer eine individuelle Trainingssequenz zugeordnet wird - unabhängig von der dem Teilnehmer jeweils zugeordneten Funkzelle.

FIG 2 zeigt ein Blockschaltbild zur Durchführung des erfindungsgemäßen Verfahrens.

Vergleichend mit FIG1 gelangen bei der ersten Basisstation BTS1 die Teilnehmersignale TN1, TN2, TN3 und TN4 über eine Antenneneinrichtung AE zu einer Empfangseinrichtung EE, mit deren Hilfe IQ-Werte IQV der vier Teilnehmersignale TN1 bis TN4 gebildet werden.
Dabei stellt das Teilnehmersignal TN1 ein Nutzsignal dar, während die Teilnehmersignale TN2 bis TN4 Störsignale bilden.

Die IQ-Werte IQV gelangen an einen JOGA-Kanalschätzer JCE, mit dessen Hilfe Impulsantworten des Nutzsignals hsig und Impulsantworten der Störsignale hint gebildet werden. Weiterhin werden mit dessen Hilfe synchronisierte IQ-Werte SIQV sowohl des Nutzsignals als auch der Störsignale gebildet. Durch das JOGA-Verfahren werden bei der Kanalschätzung jedoch nur die maximale Gleichkanalstörungen verursachenden Störsignale der Teilnehmer TN2 und TN3 berücksichtigt.

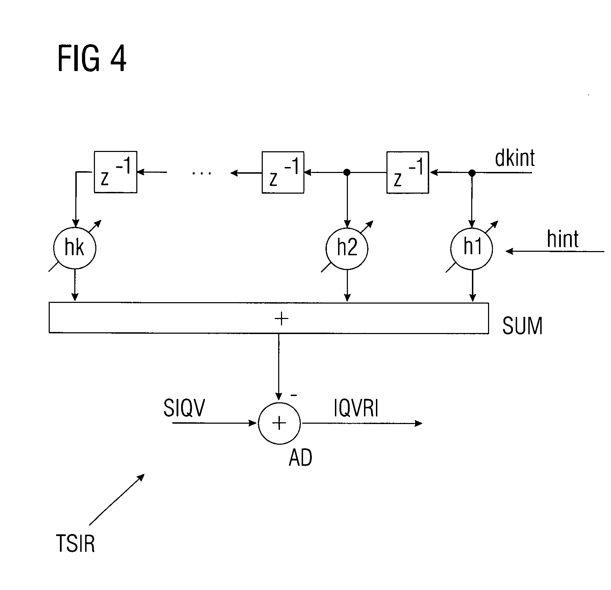

Die synchronisierten IQ-Werte IQV und die Kanalimpulsantworten der Störsignale gelangen an eine Einrichtung zur Interferenzentfernung TSIR, mit deren Hilfe von den Störsignalen bereinigte IQ-Werte IQVRI mit reduzierten Interferenzanteilen gewonnen werden.
Die Entfernung der Interferenzanteile basiert darauf, dass die Trainingssequenzen sowie die Kanalimpulsantworten der störenden Teilnehmer vorbekannt sind. Damit kann die Interferenz von Symbolen der Trainingssequenzen störender Teilnehmer (nachfolgend in FIG 4 gezeigt) bestimmt werden. Damit verbessern sich auch Signalqualitäten von Symbolen, die an die Trainingssequenz angrenzen.

Besonders vorteilhaft ist diese Verbesserung bei einem GSM-Mobilfunksystem, bei dem sogenannte "stealing flags" an den Trainingssequenzen angrenzen, die für schnelle Signalisierungen verwendet werden (beispielsweise zur Signalisierung bei einem schnellen Handover).

Die IQ-Werte IQVRI gelangen zusammen mit den Kanalimpulsantworten hsig des Nutzsignals an einen Viterbi-Detektor VITD. Mit Hilfe des Viterbi-Detektors VITD werden Softentscheidungswerte detso gewonnen, die zur Weiterverarbeitung gelangen.

Das erfindungsgemäße Verfahren wurde stellvertretend für alle weiteren Basisstationen an der Basisstation BTS 1 aufgezeigt, jedoch ist das Verfahren auch bei den jeweiligen mobilen Teilnehmern implementierbar.

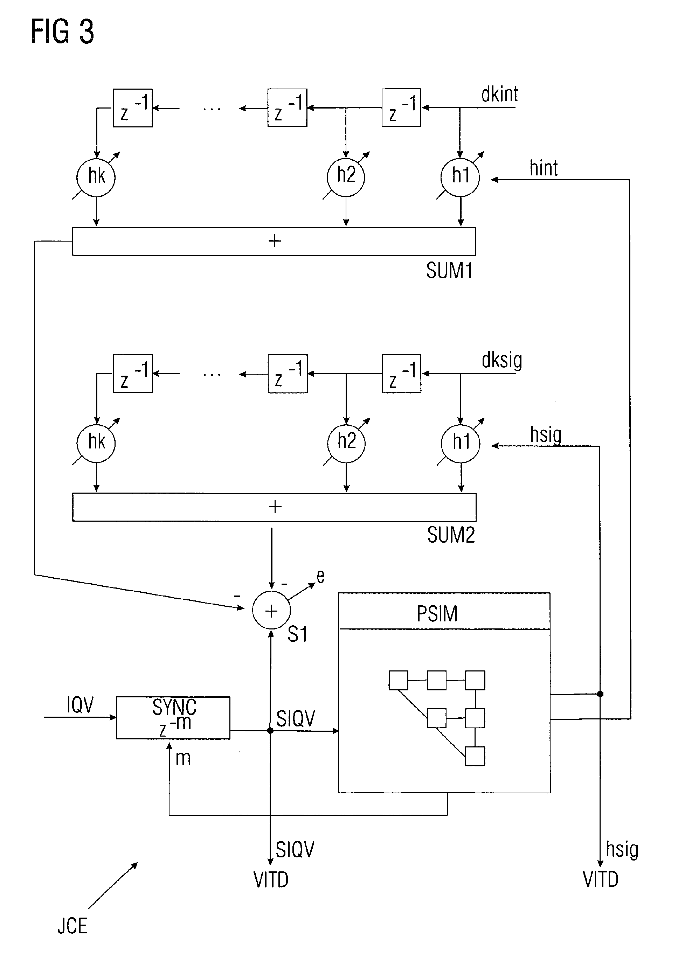

FIG 3 zeigt ein Ausführungsbeispiel des in FIG 2 dargestellten Joga-Kanalschätzers JCE.

Die in FIG 2 dargestellten IQ-Werte IQV gelangen an eine Synchronisationseinrichtung SYNC, mit deren Hilfe die funkzellenspezifische Trainingssequenz des Nutzsignals synchronisiert wird. Mit Hilfe der Synchronisation werden Signallaufzeiten zwischen dem Teilnehmer TN1 und der Basisstation BTS1 korrigiert. Ist das Nutzsignal synchronisiert, sind ebenfalls die Störsignale synchronisiert, da die Basisstationen zeitlich mit Hilfe des über die Location Measurement Unit LMU empfangene GPS-Signal synchronisiert werden.

Die Synchronisation erfolgt hier mit Hilfe eines über eine "Location Managment Unit" empfangenen GPS-Signals.

Als Ausgangssignale der Synchronisationseinrichtung SYNC werden synchronisierte IQ-Werte SIQV gebildet, die einerseits an eine Einrichtung zur pseudoinversen Multiplikation PSIM und andererseits an einen Addierer S1 gelangen.

Mit Hilfe der Einrichtung zur pseudoinversen Multiplikation PSIM werden Kanalimpulsantworten hsig des Nutzsignals und Kanalimpulsantworten hint der Störsignale ermittelt, wobei die Kanalimpulsantworten hsig des Nutzsignals und der Störsignale einer JOGA-Kanalschätzung zugeführt werden. Zusätzlich werden zur JOGA-Kanalschätzung Symbole dkint und dksig verwendet, wobei die Symbole dksig die Symbole der Trainingssequenz des Nutzsignals und die Symbole dkint die Symbole der Trainingsequenz der Störsignale darstellen. Zur Bildung der Symbole dksig und dkint sei auf EP 0988714, Gleichungen 5, 6 und 7 hingewiesen. Auf diese Symbole kann beispielsweise mit Hilfe eines Festwertspeichers, der vorteilhaft beim JOGA-Kanalschätzer JCE angeordnet ist, zurückgegriffen werden. Dieser Festwertspeicher enthält dann die in "Technical Specification 3GPP TS 05.02 V8.8 (2001-01)", Release 1999, definierten Trainingssequenzen.

Die Kanalimpulsantworten hsig des Nutzsignals gelangen an den Detektor VITD.

Durch die Zuordnung von Trainingsequenzen zu den Funkzellen sind diese a priori bekannt. Verwendbare Trainingsequenzen sind beispielsweise in "Technical Specification 3GPP TS 05.02 V8.8.0 (2001-01)", Kapitel 5.2.3 definiert, während dem Kapitel 5.2 ein Aufbau eines GSM-Bursts zu entnehmen ist.

Mit Hilfe des Addierers S1 wird ein Wert ε als Rauschmaß gebildet und auf "0" optimiert. Bei ε=0 ist die Synchronisation und die Bestimmung der Kanalimpulsantworten hsig bzw. hint als optimal zu betrachten. Ein Rest des Werts ε repräsentiert einen nicht mehr zu beseitigenden Rauschanteil bzw. Fehleranteil. Zur Berechnung des Werts ε wird auf die Gleichung 8 in EP 0988 714 B1 verwiesen.

Mit Hilfe der JOGA-Kanalschätzung werden als Störsignale nur diejenigen Teilnehmersignale benachbarter Funkzellen berücksichtigt, die beim Nutzsignal maximale Gleichkanalstörungen verursachen und die anhand der jeweils zugeordneten Trainingssequenzen leicht ermittelbar sind.

Im folgenden werden zwei Ansätze zur zeitlichen Synchronisation der IQ-Werte IQV und zur Kanalschätzung betrachtet.

Ein erster Ansatz, der zwar aufwändig aber genau ist, besteht darin, für alle in Frage kommenden Synchronisationspositionen einen Parameter m entsprechend einzustellen und für jede Synchronisationsposition eine pseudoinverse Multiplikation mit Hilfe der Einrichtung PSIM und eine Parameterbestimmung des Werts ε durchzuführen. Es wird dann eine Synchronisationsposition gewählt, bei der der Wert ε minimal ist. Die Bildung des Werts ε ist wiederum der Gleichung 8 in EP 0988 714 B1 entnehmbar.

Bei einem zweiten Ansatz erfolgt eine Synchronisation mit Hilfe einer Korrelation. Da zu diesem Zweck die IQ-Werte bereits synchronisiert sein müssen, braucht im Anschluss eine pseudoinverse Multiplikation mittels der Einrichtung PSIM lediglich einmal ausgeführt werden.

FIG 4 zeigt ein Ausführungsbeispiel einer in FIG 2 dargestellten Einrichtung zur Interferenz-Entfernung TSIR.
Die Symbole dkint gelangen einerseits direkt, andererseits zeitverzögert an Bewertungseinrichtungen h1, h2, ..., hk, an denen die Kanalimpulsantworten hint der Störsignale anliegen. Die Ausgangssignale der Bewertungseinrichtungen h1,...,hk werden mit Hilfe einer Summationseinrichtung SUM aufsummiert und negiert einem Addierer AD zugeführt, an dem ebenfalls die synchronisierten IQ-Werte SIQV anliegen. Der Addierer bildet dann die in der Interferenz reduzierten IQ-Werte IQVRI.

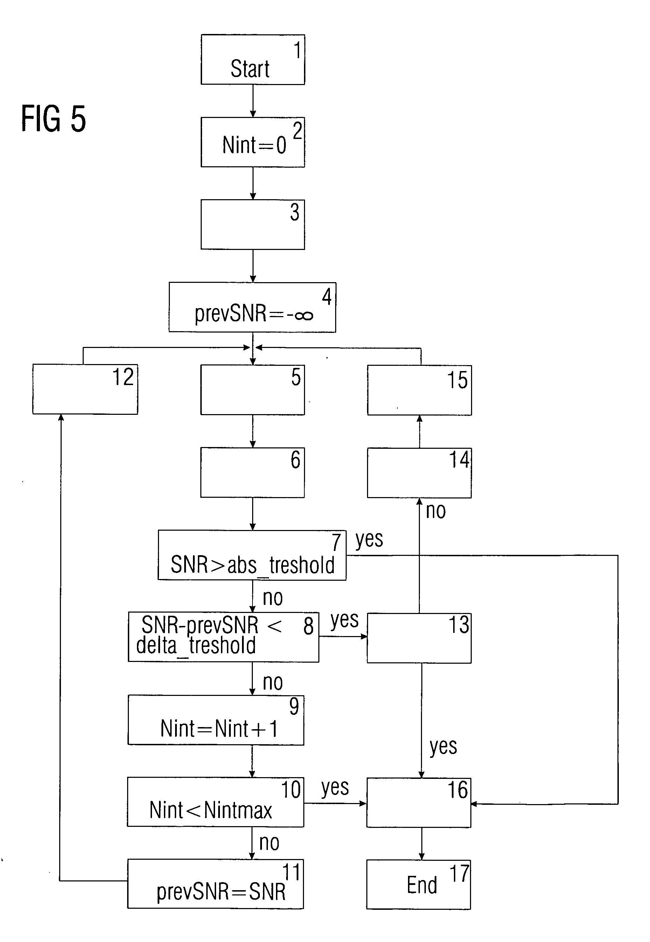

FIG 5 zeigt ein Ablaufdiagramm zur Auswahl derjenigen Teilnehmersignale, die bei einem ersten Teilnehmer maximale Gleichkanalstörungen verursachen.

Das Ablaufdiagramm beginnt bei Schritt 1. Bei Schritt 2 wird eine Variable NINT=0 vorbelegt, die eine aktuelle Anzahl von zu berücksichtigender störender Teilnehmersignale darstellt.

Bei Schritt 3 werden Listen tcint_candidate_list und tc_int_list initialisiert, wobei Trainingssequenzen potentiell störender Teilnehmer in der Liste tcint_candidate_list und Trainingssequenzen von als Störer ermittelten Teilnehmern in der Liste tc_int_list aufgeführt sind. Bei der Initialisierung wird die Liste tcint_candidate_list aufgefüllt und die Liste tcint_int_list geleert.

Bei Schritt 4 wird ein Wert prevSNR=-∞ gesetzt, der einen im späteren Ablaufdiagramm verwendeten Signal-Noise-Ratio-Wert darstellt.

Bei Schritt 5 werden Kanalimpulsantworten hsig des Nutzsignals und die Kanalimpulsantworten hint derjenigen Anzahl NINT störender Teilnehmer geschätzt, die in der Liste tc-int-list aufgeführt sind. Beim ersten Durchlauf ist die Liste tc_int_list noch leer , weshalb dann die Kanalimpulsantwort des Nutzsignals ohne Berücksichtigung von Störsignalen geschätzt wird.

Bei Schritt 6 wird der Signal-Noise-Ratio Wert SNR aus den Trainingssequenzen des Nutzsignals, aus den NINT störenden Teilnehmersignalen sowie den für Nutzsignal und Störsignal ermittelten Kanalimpulsantworten bestimmt.

Bei Schritt 7 wird verglichen: SNR>abs_treshold, wobei abs_treshold ein systembedingt vorgegebener SNR-Schwellwert ist. Mit Hilfe dieses Werts abs_treshold wird bei einem sehr guten Signal-Noise-Ratio SNR, bei dem eine fehlerfreie Detektion bereits ermöglicht ist, der Ablauf beendet.

Bei Schritt 8 wird eine Differenz SNR-prevSNR gebildet und anschließend verglichen: SNR-prevSNR<delta_treshold, wobei delta_treshold ein systembedingt vorgegebener Schwellwert ist. Dieser Schwellwert delta_treshold wurde eingeführt, da ein berücksichtigter zusätzlicher störender Teilnehmer im mathematischen Gleichungssystem das geschätzte Signal-Noise-Ratio automatisch verbessert, während in der Realität keine Verbesserung des Signal-Noise-Ratio erfolgt.
Der Ablauf wird daher nur dann bei Eintritt einer Mindestverbesserung fortgesetzt, die mit dem Schwellwert delta_treshold einstellbar ist.

Bei Schritt 9 wird NINT=NINT+1 gesetzt.
Bei Schritt 10 wird NINT mit einem systembedingten Wert NINT_max verglichen. Der Wert NINT_max ist durch eine maxmimale Implementierungskomplexität und die Zahl der in Frage kommenden Trainingssequenzen festgelegt.

Bei Schritt 11 wird prevSNR=SNR gesetzt.
Bei Schritt 12 wird eine Trainingssequenz aus der Liste tc_int_candidate_list in die Liste tc_int_list überführt.

Bei Schritt 16 werden die Kanalimpulsantworten des Nutzsignals und die Kanalimpulsantworten der NINT störenden Teilnehmersignale ermittelt und das Verfahren bei Schritt 17 beendet.

Bei Schritt 13 wird verglichen, ob alle Trainingssequenzen der Liste tc_int_candidate_list bewertet, d.h. in die Liste tc_int_list überführt wurden. Ist dies der Fall, wird zu Schritt 16 übergegangen.

Ist dies nicht der Fall, so wird bei Schritt 14 die zuletzt ausgewählte Trainingssequenz eines störenden Teilnehmers aus der Liste tc_int_list entfernt.

Bei Schritt 15 wird aus der Liste tc_int_candidate_list die nächste Trainingsequenz in die Liste tc_int_list übernommen.

Der Wert prevSNR wurde eingeführt, um eine schrittweise Verbesserung der Kanalschätzung erkennbar zu machen.

Der Wert delta_treshold wird derart gewählt, dass die jeweiligen Berechnungen solange durchgeführt werden, solange relevante störende Teilnehmersignale vorhanden sind.

Die maximale Anzahl von störenden Teilnehmersignalen wird geschätzt und als NINTmax bezeichnet.

## Patentansprüche

1. Verfahren zur Übertragung von Teilnehmersignalen mehrerer Teilnehmer in benachbarten Funkzellen eines Funkkommunikationssystems,
- bei dem die Teilnehmersignale mehrerer Teilnehmer in den benachbarten Funkzellen mit Hilfe eines Zeitschlitz-Vielfachzugriffsverfahrens übertragen werden,
- bei dem in den benachbarten Funkzellen gleiche Trägerfrequenzen zur Übertragung verwendet werden,
- bei dem sendeseitig den Teilnehmern benachbarter Funkzellen sich unterscheidende Trainingssequenzen zugeordnet werden, die mit Teilnehmernutzdaten zum Teilnehmersignal zusammengefasst werden, wobei Sendezeitpunkte der Trainingssequenzen untereinander zeitlich synchronisiert sind,
- bei dem empfangsseitig Gleichkanalstörungen bei einem ersten Teilnehmer einer ersten Funkzelle durch Teilnehmersignale eines zweiten Teilnehmers einer benachbarten zweiten Funkzelle mit Hilfe der Trainingssequenzen unterdrückt werden.

2. Verfahren nach Anspruch 1, bei dem jedem Teilnehmer jeweils eine funkzellenspezifische Trainingssequenz zugewiesen wird.

3. Verfahren nach Anspruch 1, bei dem jedem Teilnehmer jeweils eine teilnehmerspezifische Trainingssequenz zugewiesen wird.

4. Verfahren nach einem der vorhergehenden Ansprüche, bei dem empfangsseitig für den ersten Teilnehmer der ersten Funkzelle diejenigen Teilnehmer benachbarter Funkzellen mit Hilfe der Trainingssequenzen ermittelt werden, die beim ersten Teilnehmer maximale Gleichkanalstörungen verursachen.

5. Verfahren nach Anspruch 4, bei dem bei einer empfangsseitig durchgeführten Kanalschätzung das erste Teilnehmersignal und die maximale Gleichkanalstörungen verursachenden Teilnehmersignale berücksichtigt werden.

6. Verfahren nach Anspruch 5, bei dem das Zeitschlitz-Vielfachzugriffsverfahren nach dem GSM-Standard erfolgt.

7. Verfahren nach Anspruch 6, bei dem die Kanalschätzung mit Hilfe einer JOGA-Kanalschätzung durchgeführt wird, mit deren Hilfe aus empfangenen eingangsseitigen I/Q-Werten des ersten Teilnehmers und ihn störender Teilnehmer ausgangsseitig synchronisierte I/Q-Werte und Kanalimpulsantworten des ersten Teilnehmers und der ihn maximal störenden Teilnehmer bestimmt werden.

8. Verfahren nach Anspruch 7, bei dem die synchronisierten I/Q-Werte und die Kanalimpulsantworten der maximal störenden Teilnehmer derart verarbeitet werden, dass I/Q-Werte mit reduzierter Interferenz erzeugt werden.

9. Verfahren nach Anspruch 7 oder 8, bei dem
- bei der JOGA-Kanalschätzung die zeitliche Synchronisation der eingangsseitigen IQ-Werte mit Hilfe eines Korrelators erfolgt, und
- bei der JOGA-Kanalschätzung eine Pseudo-Inverse Multiplikation nur einmal durchgeführt wird.

10. Verfahren nach Anspruch 8 oder 9, bei dem die in der Interferenz reduzierten I/Q-Werte zusammen mit den Kanalimpulsantworten des ersten Teilnehmers an einen Viterbi-Detektor gelangen.
